# EUROPÄISCHE PATENTSCHRIFT

(11) **EP 1 464 149 B1**
(45) Veröffentlichungstag und Bekanntmachung des Hinweises auf die Patenterteilung: **06.09.2006**
(21) Anmeldenummer: 03704203.3
(22) Anmeldetag: 07.01.2003
(51) Int. Cl.: H04L 29/00, H04L 29/06, H04L 29/08

(54) **VERFAHREN ZUR ANONYMEN IDENTIFIZIERUNG VON PROFILEN VON TEILNEHMERN EINES KOMMUNIKATIONSSYSTEMS**
METHOD FOR ANONYMOUS IDENTIFICATION OF THE PROFILES OF SUBSCRIBERS IN A COMMUNICATION SYSTEM
PROCEDE D'IDENTIFICATION ANONYME DE PROFILS D'ABONNES D'UN SYSTEME DE COMMUNICATION

(30) Priorität: 11.01.2002 DE 10201248
(43) Veröffentlichungstag der Anmeldung: 06.10.2004
(73) Patentinhaber: SIEMENS AKTIENGESELLSCHAFT, 80333 München (DE)
(72) Erfinder: ENDERLEIN, Janos-Gerold, 10115 Berlin (DE); KLASSEN, Volker, 54426 Büdlich (DE); RIEMANN, Wilfried, 73061 Ebersbach (DE)
(86) Internationale Anmeldenummer: PCT/DE2003/000067
(87) Internationale Veröffentlichungsnummer: WO 2003/058908

(56) Entgegenhaltungen:
- WO-A-00/22860
- WO-A-01/24551
- WO-A-01/97543
- DE-A- 3 922 677
- US-A- 5 872 850
- KROPAT M: "MOBILE DATING" TECHNIK REPORT, SIEMENS AG.,ERLANGEN, DE, Bd. 2, Nr. 3, April 1999 (1999-04), Seiten 122-124, XP000822905 ISSN: 1436-7777

## Beschreibung

Die vorliegende Erfindung betrifft ein Verfahren zur anonymen Identifizierung von Profilen von Teilnehmern eines Kommunikationssystems, insbesondere eines drahtlosen Kommunikationssystems. Bei der Suche nach bestimmten Angebots- und Nachfrageprofilen ist es oft wünschenswert, zum einen vor der unmittelbaren Kontaktierung eines Teilnehmers mit einem bestimmten Profil eine anonyme Selektion unter verschiedenen zur Auswahl stehenden Profilen durchführen zu können, zum anderen gleichzeitig aber auch die Möglichkeit einer sofortigen persönlichen Kontaktaufnahme mit einem entsprechenden Teilnehmer zu haben. Bislang war es üblich, ein Angebot bzw. eine Nachfrage mittels konventioneller Medien wie beispielsweise Print (Annonce), Internet (z.B. Webpage), Mobilfunktechnologien, wie beispielsweise über Fragebögen von Anbietern, selbst zu verfassen. Dieses Angebot wurde dann manuell, teilautomatisiert oder vollautomatisch mit bereits hinterlegten Angeboten bzw. Nachfragen verglichen. Beispielhaft sei hier der kognitive Vergleich von Annoncen mit dem Wunschprofil des Suchenden, die Suche im Internet mit Suchmaschinen und der Einsatz von Suchrobotern genannt. Eine direkte sofortige Kontaktierung eines bestimmten Teilnehmers in Kombination mit einer anonymen Vorselektion war bislang nicht möglich.

Aus der DE 39 22 677 A1 ist ein Verfahren zur anonymen Identifizierung von Profilen von Teilnehmern eines Kommunikationssystems bekannt, bei dem zunächst die Teilnehmer teilnehmerspezifische Profile (Eingabedaten, Solldaten) über je eine Eingabeeinheit in je einem Kommunikationsgerät definieren und speichern, dann über eine Funkverbindung empfangene Eingabedaten mit gespeicherten Solldaten in dem jeweiligen Kommunikationsgerät verglichen werden, dann die empfangenen Eingabedaten gemäß teilnehmerspezifischer Korrelationsschwellen verworfen oder dem jeweiligen Teilnehmer mitgeteilt werden, dann der jeweilige Teilnehmer eine Kommunikationsverbindung durch Übermittlung von Adressdaten zum jeweils anderen Teilnehmer initieren kann. Während die Identifizierung von Profilen anderer Teilnehmer anonym erfolgt, wird durch die Initiierung der Kommunikationsverbindung die Anonymität aufgehoben.

Aus der WO 00/22860 A1 ist ein Verfahren und System bekannt, bei dem ein Teilnehmer A durch einen zwischengekoppelten Anbieter (das Mobilfunknetz) benachrichtigt wird, wenn ein vorselektierter Teilnehmer B in einen vorselektierten geografischen Bereich eintritt. Die Benachrichtigung erfolgt vorzugsweise nur dann, wenn in einer Datenbank des zwischengekoppelten Anbieters hinterlegte Profile der beiden Teilnehmer eine ausreichende Korrelation aufweisen. Aufgrund der Benachrichtigung durch den zwischengekoppelten Anbieter können beide Teilnehmer eine Kommunikationsverbindung zueinander herstellen. Da die Benachrichtigung die persönliche Telefonnummer des jeweils anderen umfasst, ist keine Anonymität beim Aufbau der Kommunikationsverbindung gewährleistet (und auch nicht beabsichtigt).

Es war nunmehr eine Aufgabe der vorliegenden Erfindung, ein Verfahren bereitzustellen, mit dessen Hilfe es für einen Teilnehmer eines Kommunikationssystems möglich ist, einfach und schnell anonym Angebots- und Nachfrageprofile anderer Teilnehmer des Kommunikationssystems zu identifizieren und gegebenenfalls sofort anonym mit einem oder mehreren Teilnehmern Kontakt aufzunehmen.

Gelöst wird diese Aufgabe durch ein erfindungsgemäßes Verfahren gemäß Anspruch 1. Vorteilhafte Ausführungsformen sind in den jeweiligen Unteransprüchen aufgeführt.

Gemäß Anspruch 1 wird ein Verfahren zur anonymen Identifizierung von Profilen eines ersten Teilnehmers durch einen zweiten Teilnehmer eines Kommunikationssystems und gegebenenfalls zur Herstellung einer anonymen Kommunikationsverbindung zwischen dem ersten Teilnehmer und dem zweiten Teilnehmer bereitgestellt, bei dem
a) der erste Teilnehmer ein erstes teilnehmerspezifisches Profil über eine Eingabeeinheit eines ihm zugeordneten ersten Kommunikationsgeräts und/oder eines mit diesem ersten Kommunikationsgerät gekoppelten ersten Moduls definiert und speichert,
b) der zweite Teilnehmer ein zweites teilnehmerspezifisches Profil über eine Eingabeeinheit eines ihm zugeordneten zweiten Kommunikationsgeräts und/oder eines mit diesem zweiten Kommunikationsgerät gekoppelten zweiten Moduls definiert und speichert,
c) das erste Modul das von dem zweiten Modul auf Basis einer drahtlosen, lokal begrenzten Netzwerk-Technologie ausgesendete zweite teilnehmerspezifische Profil und eine dem zweiten Modul zugeordnete von dem zweiten Modul ausgesendete zweite ID-Nummer des zweiten Moduls empfängt und das empfangene zweite teilnehmerspezifische Profil mit dem in dem ersten Kommunikationsgerät und/oder in dem ersten Modul definierten und gespeicherten ersten teilnehmerspezifischen Profil vergleicht und gemäß einer ersten teilnehmerspezifischen Korrelationsschwelle verwirft oder dem ersten Teilnehmer mitteilt,
d) das zweite Modul das von dem ersten Modul auf Basis einer drahtlosen, lokal begrenzten Netzwerk-Technologie ausgesendete erste teilnehmerspezifische Profil und eine dem ersten Modul zugeordnete von dem ersten Modul ausgesendete erste ID-Nummer des ersten Moduls empfängt und das empfangene erste teilnehmerspezifische Profil mit dem in dem zweiten Kommunikationsgerät und/oder in dem zweiten Modul definierten und gespeicherten zweiten teilnehmerspezifischen Profil vergleicht und gemäß einer zweiten teilnehmerspezifischen Korrelationsschwelle verwirft oder dem zweiten Teilnehmer mitteilt, wobei
e) der erste Teilnehmer, nachdem ihm ein zweites teilnehmerspezifisches Profil mitgeteilt wurde, eine Kommunikationsverbindung zu einem zwischengekoppelten Anbieter des Kommunikationssystems aufbauen kann, wodurch dem zwischengekoppelten Anbieter ein Kontaktwunsch des ersten Teilnehmers zum zweiten Teilnehmer, die erste ID-Nummer und die zweite ID-Nummer mitgeteilt wird,
f) der zweite Teilnehmer, nachdem ihm ein erstes teilnehmerspezifisches Profil mitgeteilt wurde, eine Kommunikationsverbindung zu dem zwischengekoppelten Anbieter aufbauen kann, wodurch dem zwischengekoppelten Anbieter ein Kontaktwunsch des zweiten Teilnehmers zum ersten Teilnehmer, die erste ID-Nummer und die zweite ID-Nummer mitgeteilt wird,
g) wobei der zwischengekoppelten Anbieter dem ersten Teilnehmer eine erste neutrale Telefonnummer und dem zweiten Teilnehmer eine zweite neutrale Telefonnummer zuordnet, und dem ersten Teilnehmer die zweite neutrale Telefonnummer und dem zweiten Teilnehmer die erste neutrale Telefonnummer zur Verfügung stellt, über die bei Kontaktaufnahme durch einen der Teilnehmer über den zwischengekoppelten Anbieter eine Kommunikationsverbindung hergestellt wird.

Bei der Eingabeeinheit kann es sich dabei beispielsweise um eine Tastatur eines mobilen Kommunikationsgerätes, wie beispielweise eines Mobiltelefons, oder um eine Tastatur einer Rechnereinheit, wie beispielsweise eines Personal Computers (PC) handeln. Eine weitere Möglichkeit ist die Eingabe des Profils an einem externen Gerät, beispielsweise an einem Personal Computer (PC), und die Übertragung der Daten zum Kommunikationsgerät über eine drahtlose Schnittstelle, im Allgemeinen über eine Funk- oder eine Infrarot-Schnittstelle.

Das an ein Kommunikationsgerät gekoppelte Modul kann in das Kommunikationsgerät integriert sein und somit Bestandteil des Kommunikationsgerätes sein oder als externes Modul mit dem Kommunikationsgerät in Form eines sogenannten "plug on"-Moduls verbunden sein.

In einer bevorzugten Ausführungsform wird als drahtlose, lokal begrenzte Netzwerk-Technologie eine LAN-(local area network) und/oder eine PAN-(personal area network)Technologie verwendet. Besonders bevorzugt wird dabei eine Bluetooth-Technolgie verwendet. Unter der Bezeichnung Bluetooth wurden 1998 Spezifikationen von einer "Special Interest Group", bestehend aus Experten verschiedener Firmen, für ein lokales Datenfunksystem vorgestellt. In einem lizenzfreien Frequenzband 2,4GHz (ISM-Band) wird den Teilnehmern des Kommunikationssystems eine Übermittlungskapazität bis ca. 1 Mbit/s angeboten. Die Reichweite ist mit < 100 m gering und somit vorrangig ausgelegt für eine Kommunikation im lokalen Bereich. Im Rahmen der Erfindung eignet sich die Bluetooth-Technologie aus den im folgenden angeführten Gründen besonders gut:
1. die Bluetooth-Technologie wurde weltweit standardisiert, sie ist preiswert und stellt ein Massenprodukt dar,
2. sie lässt sich einfach in Kommunikationsgeräte mit zellularem Mobilfunkstandard, wie beispielsweise GSM, GPRS, EDGE, UMTS integrieren,
3. es entstehen keine Kosten für die Benutzung eines Funkkanals.
4. es ist eine gewollte Reichweitenbegrenzung gegeben, denn erfindungsgemäß sollen nur die Geräte in der unmittelbaren Umgebung kontaktiert werden.

Als Alternative zu Bluetooth kann die IEEE 802.11b LAN Technologie verwendet werden. Weitere drahtlose Technologien für "Local- und Personal Area Network" Applikationen sind gegenwärtig in der Phase der Standardisierung.

Die verwendete Technologie ist dabei vorzugsweise mit einem mobilen, nach einem zellularen Standard funktionierenden Kommunikationsgerät (im Folgenden als zellulares Kommunikationsgerät bezeichnet) gekoppelt. Besonders bevorzugt handelt es sich dabei um ein mobiles Kommunikationsgerät nach dem GSM-, GPRS-, EDGE und/oder UMTS-Standard.

Zur anonymen Identifizierung von passenden Angebots- und Nachfrageprofilen in der unmittelbaren Umgebung des suchenden Teilnehmers des Kommunikationssystems wird von dem suchenden Teilnehmer beispielsweise mit Hilfe einer Kategorisierungs- und Beschreibungsvorschrift beispielsweise ein Objektangebots-, Nachfrage- oder Interessenprofil definiert und in geeigneter Form vorteilhaft im Modul oder Kommunikationsgerät gespeichert. Mit der standardisierten Kategorisierungsvorschrift wird beispielsweise die Art des Angebots- bzw. Nachfrageobjektes oder Interessengebietes beschrieben und mit der standardisierten, objekttypischen Beschreibungsvorschrift das Objekt selbst. Die Festlegung von standardisierten Vorschriften schafft die Möglichkeit von erfolgreichen Korrelationen.

Das verwendete Modul kontaktiert auf Basis einer drahtlosen, lokal begrenzten Netzwerk-Technologie automatisch, ad hoc, jedes weitere Modul, das sich in derselben Funkzelle wie der suchende Teilnehmer selbst befindet. Es wird also eine direkte, bidirektionale Verbindung hergestellt. Nach der Identifizierung eines weiteren Moduls in der entsprechenden Funkzelle des Teilnehmers wird eine ad hoc Verbindung zu diesem Modul aufgebaut und nachfolgend, vorteilhafterweise bidirektional, die Profile der entsprechenden Teilnehmer zu dem suchenden Teilnehmer übermittelt. Nach dem Empfang der Daten findet eine Korrelation der Profile, vorteilhafterweise in beiden beteiligten Modulen, statt.

In einer bevorzugten Ausführungsform des erfindungsgemäßen Verfahrens wird jedem Modul eines Teilnehmers eine ID-Nummer zugeordnet. Vorteilhafterweise wird automatisch die vom Bluetooth-Standard unterstützte sogenannte Bluetooth Device-Adresse als ID-Nummer verwendet, die weltweit jedes Bluetooth Modul eineindeutig kennzeichnet. Die Module übertragen beispielsweise nach dem ersten Einschalten der Systeme ihre ID-Nummern über die vorzugsweise zellularen Kommunikationsgeräte zu dem zwischengekoppelten Anbieter bzw. Provider. Der Provider stellt damit eine eindeutige Zuordnung zwischen der ID-Nummer des Moduls und der Adressierung (Telefonnummer) des zellularen Kommunikationsgerätes her. Diese Zuordnung ist nur solange gültig wie das Modul nicht ausgetauscht wird. Wird ein anderes Modul an das Kommunikationsgerät angeschlossen, muss eine neue Zuordnung bei dem Provider stattfinden. Hierzu kann das oben erwähnte Verfahren genutzt werden. Die ID-Nummern werden ebenfalls zur Identifizierung der entsprechenden Module bidirektional bei der Kontaktierung zwischen je zwei Modulen übertragen.

Eine vorher von dem entsprechenden Teilnehmer definierte Korrelationsschwelle entscheidet nach der Korrelation, ob zwei Profile als ausreichend übereinstimmend gewertet werden sollen. Ist dies der Fall, so wird der Teilnehmer in geeigneter Form, beispielsweise akustisch, über ein positives Korrelationsergebnis informiert. Die Information sagt aus, dass hinsichtlich der Angebot- und Nachfrage, sich ein interessanter Partner bzw. Objekt in der unmittelbaren Nähe befindet. Bei Verwendung der Bluetooth-Technologie beträgt dieser Abstand im Allgemeinen < 100m.

Für eine abschließender persönliche Kontaktierung der Teilnehmer, d.h. zur Herstellung einer direkten Kommunikationsverbindung, sind nunmehr im Sinne der vorliegenden Erfindung folgende Kriterien wichtig:
- Durch die verwendete Netzwerk-Technologie kann und soll keine direkte Sichtverbindung vorausgesetzt werden, was die Kontaktierung vereinfachen würde.
- Durch den Wunsch nach Diskretion darf es nicht zwingend erforderlich sein, eine direkte persönliche (Sicht-) Verbindung aufnehmen zu müssen bzw. erkannt zu werden. Ferner darf es nicht zwingend sein, die Verbindung zeitlich sofort aufnehmen zu müssen. Auch muss vermieden werden können, persönliche Angaben zur direkten Kontaktierung, wie Telefonnummer oder Adresse, preisgeben zu können.
- Der Teilnehmer hat volle Flexibilität zu einer Annahme oder einer Ablehnung einer persönlichen Kontaktierung bei vollem Schutz seiner Intimsphäre.

Soll eine direkte Kommunikationsverbindung hergestellt werden, so geschieht dies erfindungsgemäß durch eine jeweilige teilnehmerseitige geeignete Aktivierung. Eine derartige Aktivierung kann beispielsweise durch Drücken einer Taste am Modul oder an der Eingabeeinheit des Kommunikationsgerätes vorgenommen werden. Erfindungsgemäß wird dann zunächst automatisch eine Kommunikationsverbindung, vorzugsweise eine GSM-, GPRS-, EDGE- oder UMTS-Verbindung zu einem zwischengekoppelten Anbieter, einem sogenannten Provider, des Kommunikationssystems aufgebaut. Dieser zwischengekoppelte Anbieter bzw. Provider übernimmt die Organisation der Kontaktierung. Die Kontaktierung kann beispielsweise folgendermaßen organisiert sein:

Ein Modul eines Teilnehmers A übermittelt die ID-Nummer eines Moduls eines Teilnehmers B, den der Teilnehmer A kontaktieren möchte, mit einer Kontaktanforderung über das vorzugsweise zellulare Kommunikationsgerät zu dem zwischengekoppelten Anbieter bzw. Provider. Mit dieser, bei dem Anbieter hinterlegten ID-Nummer ist Teilnehmer B und das zugehörige Modul eindeutig identifizierbar. Der Anbieter bzw. Provider prüft, ob das Modul des Teilnehmers B bzw. der Teilnehmer B, mit dem der Teilnehmer A Kontakt aufnehmen möchte, ebenfalls im Rahmen eines zu definierenden Zeitfensters ein Interesse an einer Kontaktierung bekundet hat, nachdem ihm ebenfalls die ID-Nummer zusammen mit einer Kontaktanforderung übermittelt wurde. Ist dies nicht der Fall, so ist die direkte Kontaktierung nicht möglich. Je nach der Tarifgestaltung kann auch im Fall einer nicht erfolgreichen direkten Kontaktierung der Anbieter bzw. Provider vom Teilnehmer A eine Gebühr berechnen.

Hat Teilnehmer B ebenfalls Interesse an einer Kontaktaufnahme, so überträgt Teilnehmer B bzw. das Modul des Teilnehmers B die ID-Nummer von A zusammen mit einer Kontaktanforderung ebenfalls über das vorzugsweise zellulare Kommunikationsgerät an den Provider. Liegen beide Kontaktanforderungen und die ID-Nummern der Module in einem definierten Zeitfenster vor, so ist die Kontaktierung erfolgreich. Vorzugsweise wird zur Herstellung einer Kommunikationsverbindung zwischen den Teilnehmern A und B den Teilnehmern jeweils eine neutrale Telefonnummer zugewiesen. Dadurch wird die Möglichkeit geschaffen, dass beide Teilnehmer über neutrale Telefonnummern, die zum Schutze der Anonymität ungleich mit der persönlichen Telefonnummer sind, Kontakt aufnehmen können. Die neutralen Telefonnummern werden vorzugsweise temporär für ein zu bestimmendes Zeitfenster zugewiesen. Der Anbieter kann beispielsweise für jede erfolgreiche Kontaktierung von den Teilnehmern A und B eine Gebühr erheben, die beispielsweise in der Größenordnung einer heutigen SMS (short message service) Sendung liegt. Ein Kontakt ist somit erfolgreich hergestellt. Die Teilnehmer A und B können sich nunmehr mündlich verabreden. Aufgrund der Nähe beider Teilnehmer zueinander wird auch eine sofortige persönliche Kontaktierung möglich.

In einer weiteren Anwendung der Erfindung kann einer der Teilnehmer ein stationärer oder mobiler Anbieter eines Produktes oder einer Dienstleistung sein. Entsprechend der gegebenen Beschreibung wird das Angebot bzw. die Nachfrage mit der beschriebenen Technologie jedem vorbeikommenden Teilnehmer in einem begrenzten Umkreis kommuniziert. Entsprechend bekannter Terminologie kann dieser Service als "located based offer" oder "location based services" bezeichnet werden. Neben Informationen zur genauen örtlichen Beschreibung des Ortes, kann der Anbieter der Dienstleistung, bei Bestätigung des Interesses durch einen potentiellen Kunden, vorteilhaft weitere Informationen, wie beispielsweise Preise, über das Kommunikationsgerät zugesendet bekommen. Im Unterschied zur obigen Anwendung bestätigt der Anbieter der Dienstleistung die Korrelation vorteilhaft automatisch.

Ein Vorteil der vorliegenden Erfindung gegenüber bereits bestehenden und eingangs erwähnten Identifikationssystemen ist unter anderem darin zu sehen, dass ein suchender und ein anbietender Teilnehmer sich in unmittelbarer Nähe zueinander befinden, wodurch es möglich ist, dass beide Teilnehmer bei beidseitigem Interesse gegebenenfalls direkt und spontan persönlichen Kontakt aufnehmen können. Sucht ein Teilnehmer beispielsweise einen Tennispartner in seiner unmittelbaren Nähe, mit dem er auch sogleich eine Partie Tennis spielen möchte, so ist es ihm mittels des erfindungsgemäßen Verfahrens möglich, ausfindig zu machen, ob sich in seiner Nähe, ein für ihn passender Tennispartner befindet. Ist dies der Fall, d.h. kann eine Übereinstimmung von Angebot und Nachfrage identifiziert werden, so hat jeder der beiden Teilnehmer situationsbedingte Reaktionsoptionen. Nur wenn beide Teilnehmer durch eine teilnehmerseitige Aktivierung Interesse an einer Kontaktaufnahme bekunden, wird eine Kommunikationsverbindung hergestellt. So können die beiden Teilnehmer spontan, einfach und schnell Kontakt miteinander aufnehmen. Bis zur direkten persönlichen Kontaktaufnahme bleibt die Intimsphäre durch Nichtherausgabe der persönlichen Kontaktinformation, wie beispielsweise Telefonnummer und/oder Adresse, gewahrt. Dies ist insbesondere wichtig bei der Verwendung des erfindungsgemäßen Verfahrens bei der Suche nach Freunden und/oder Partnern.

Ein weiterer Vorteil der vorliegenden Erfindung ist darin zu sehen, dass die Suche nach einem passenden Profil im näheren Umfeld örtlich und zeitlich ständig durchgeführt wird ohne dass der entsprechende Teilnehmer immer wieder tätig werden müsste. Das bedeutet, dass die Suche parallel zu einer anderen Geschäftstätigkeit erfolgt. Ferner ist die Suche, wie bereits erwähnt, diskret und anonym. Sie ist unverbindlich und persönlich steuerbar.

Die vorliegende Erfindung betrifft ferner ein Modul, das in ein mobiles Kommunikationsgerät integrierbar und/oder an ein mobiles Kommunikationsgerät über eine Schnittstelle ankoppelbar ist und mindestens die folgenden Elemente aufweist:
A. eine Speichereinheit zum Speichern von Profilen,
B. eine auf Basis einer drahtlosen, lokal begrenzten Netzwerk-Technologie funktionierende Sammeleinheit zum Sammeln (Scannen) von Profilen von Teilnehmern eines Kommunikationssystems,
C. eine Korrelationseinheit zum Vergleichen von Profilen untereinander,
D. eine Signalisierungs-/ Synchronisierungseinheit.

Die oben beschriebenen Bestandteile des Moduls können auch mit zunehmender Integration Bestandteile des Kommunikationsgerätes werden. So kann beispielsweise die Speichereinheit in den Speicher des Kommunikationsgerätes integriert werden, die Funktion der Korrelationseinheit durch den Prozessor des Kommunikationsgerätes ausgeführt werden und die Funktion der Signalisierungs- und Synchronisierungseinheit zusätzliche Hardware des Kommunikationsgerätes übernehmen. Kennzeichnend für das in das Kommunikationsgerät voll integrierte Modul ist die LAN-/PAN-Technologie und die spezifische Software zur Steuerung der zusätzlichen Funktionalität.

Das mobile Kommunikationsgerät unterstützt vorzugsweise zellulare Kommunikationsstandards, wie beispielsweise GSM, GPRS, EDGE oder UMTS. Die wichtigsten Komponenten des Kommunikationsgerätes sind die Mobilfunkhard- und Software mit einer Schnittstelle für das Modul und die Eingabeeinheit.

Vorzugsweise handelt es sich bei der Sammeleinheit um eine auf Basis von LAN- und/oder PAN-Technologie funktionierende Einheit.

Weiterhin bevorzugt ist die Speichereinheit ein RAM.

Bei der Korrelationseinheit handelt es sich vorzugsweise um einen Mikrorechner. Ferner ist die Signalisierungs-/Synchronisierungseinheit vorzugsweise eine softwareunterstützte Schaltung.

Weitere Vorteile der Erfindung werden anhand der folgenden Figuren näher erläutert. Es zeigt
- Fig.1: Schematisches Ablaufdiagramm eines Ausführungsbeispiels des erfindungsgemäßen Verfahrens
- Fig. 2: Schematische Darstellung einer Ausführungsform eines erfindungsgemäßen Moduls, das in einem mobilen Kommunikationsgerät integriert ist.

Zum Suchen und Identifizieren eines Profils PA seitens eines Teilnehmers A innerhalb eines Kommunikationssystems gibt der Teilnehmer A zunächst das von ihm definierte und gesuchte Profil PA in ein Modul MA ein und legt gleichzeitig eine Korrelationsschwelle KA fest. Diese Korrelationsschwelle KA bestimmt, welche Übereinstimmung beim Vergleich von Profilen anderer Teilnehmer mit dem Profil PA des Teilnehmers A vorliegen soll, damit der Teilnehmer A das entsprechend andere Profil eines anderen Teilnehmers in eine engere Auswahl zieht. Ein anderer Teilnehmer B des Kommunikationssystems gibt ein von ihm definiertes und gesuchtes Profil PB in ein Modul MB ein und legt eine Korrelationsschwelle KB fest. Die ID-Nummern von dem Modul MA des Teilnehmers A, im folgenden als ID-A bezeichnet, und von dem Modul MB des Teilnehmers B, im folgenden als ID-B bezeichnet, werden zu einem Anbieter P übertragen und dort gespeichert. Der Anbieter besitzt damit eine eindeutige Zuordnung von Telefonnummer von Teilnehmer A und der ID-Nummer ID-A von MA und Telefonnummer von Teilnehmer B und ID-Nummer ID-B von MB. Das Modul MA sammelt mittels jeweiligen Verbindungsaufbau zu anderen Modulen anderer Teilnehmer über eine LAN- oder PAN-Technologie Profile anderer Teilnehmer des Kommunikationssystems in der näheren Umgebung. Das Modul MB verfährt in gleicher Weise. Dabei wird unter anderem auch eine Verbindung A-B vom Modul MA zum Modul MB hergestellt. Modul MA sendet das Profil PA zusammen mit der ID-Nummer ID-A an das Modul MB, das die Daten empfängt. Genauso sendet das Modul MB das Profil PB zusammen mit der entsprechenden ID-Nummer ID-B an das Modul MA. Sowohl im Modul MA wie auch im Modul MB wird jeweils eine Korrelation Korr der beiden Profile PA und PB durchgeführt. Ist bei beiden Modulen die jeweilige Korrelationsschwelle KA bzw. KB erreicht, so hat sowohl der Teilnehmer A wie auch der Teilnehmer B die Möglichkeit durch entsprechende Aktivierung, wie beispielweise durch Drücken einer Taste an der Eingabeeinheit seines Moduls oder des Kommunikationsgerätes, den Wunsch nach Aufbau einer Kommunikationsverbindung zu äußern. Es wird dann automatisch eine GSM Verbindung zu dem Anbieter des Kommunikationssystems aufgebaut. Äußern beide Teilnehmer innerhalb eines festgesetzten Zeitfensters den Wunsch nach einer Kommunikationsverbindung so wird seitens des Anbieters dem Teilnehmer A eine temporäre Telefonnummer TB von Teilnehmer B und dem Teilnehmer B eine temporäre Telefonnummer TA von Teilnehmer A zugeordnet. Diese Telefonnummern werden den Teilnehmern entsprechend zugeordnet, so dass die Teilnehmer A und B über diese Telefonnummern jeweils Kontakt K miteinander aufnehmen können.

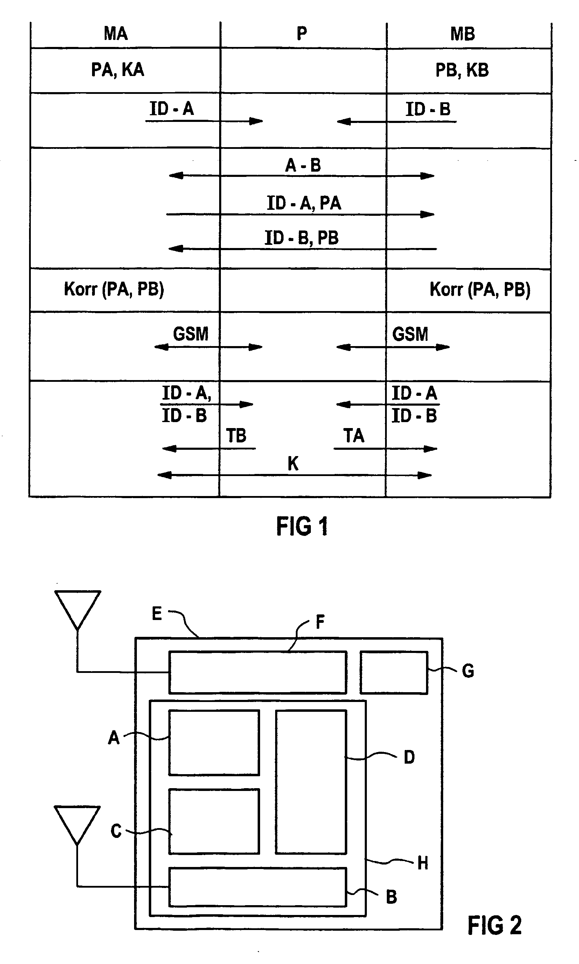

Die Figur 2 zeigt ein Modul H, das in einem mobilen Kommunikationsgerät E integriert ist. Das mobile Kommunikationsgerät E enthält als Komponente die Funkhardware F und Software mit einer Schnittstelle für das Modul H und die Eingabeeinheit G. Das Modul H enthält eine Speichereinheit A zum Speichern von Profilen, eine auf Basis einer drahtlosen, lokal begrenzten Netzwerk-Technologie funktionierende Sammeleinheit B zum Sammeln (Scannen) von Profilen von Teilnehmern eines Kommunikationssystems, eine Korrelationseinheit C zum Vergleichen von Profilen untereinander und eine Signalisierungs-/ Synchronisierungseinheit D.

## Patentansprüche

1. Verfahren zur anonymen Identifizierung von Profilen (PA, PB) eines ersten Teilnehmers (A) durch einen zweiten Teilnehmer (B) eines Kommunikationssystems und gegebenenfalls zur Herstellung einer anonymen Kommunikationsverbindung zwischen dem ersten Teilnehmer (A) und dem zweiten Teilnehmer (B), bei dem
a) der erste Teilnehmer (A) ein erstes teilnehmerspezifisches Profil (PA) über eine Eingabeeinheit (G) eines ihm zugeordneten ersten Kommunikationsgeräts (E) und/oder eines mit diesem ersten Kommunikationsgerät (E) gekoppelten ersten Moduls (H, MA) definiert und speichert,
b) der zweite Teilnehmer (B) ein zweites teilnehmerspezifisches Profil (PB) über eine Eingabeeinheit (G) eines ihm zugeordneten zweiten Kommunikationsgeräts (E) und/oder eines mit diesem zweiten Kommunikationsgerät (E) gekoppelten zweiten Moduls (H, MB) definiert und speichert,
c) das erste Modul (H, MA) das von dem zweiten Modul (H, MB) auf Basis einer drahtlosen, lokal begrenzten Netzwerk-Technologie ausgesendete zweite teilnehmerspezifische Profil (PB) und eine dem zweiten Modul (H, MB) zugeordnete von dem zweiten Modul (H, MB) ausgesendete zweite ID-Nummer (ID-B) des zweiten Moduls (H, MB) empfängt und das empfangene zweite teilnehmerspezifische Profil (PB) mit dem in dem ersten Kommunikationsgerät (E) und/oder in dem ersten Modul (H, MA) definierten und gespeicherten ersten teilnehmerspezifischen Profil (PA) vergleicht und gemäß einer ersten teilnehmerspezifischen Korrelationsschwelle (KA) verwirft oder dem ersten Teilnehmer (A) mitteilt,
d) das zweite Modul (H, MB) das von dem ersten Modul (H, MA) auf Basis einer drahtlosen, lokal begrenzten Netzwerk-Technologie ausgesendete erste teilnehmerspezifische Profil (PA) und eine dem ersten Modul (H, MA) zugeordnete von dem ersten Modul (H, MA) ausgesendete erste ID-Nummer (ID-A) des ersten Moduls (H, MA) empfängt und das empfangene erste teilnehmerspezifische Profil (PA) mit dem in dem zweiten Kommunikationsgerät (E) und/oder in dem zweiten Modul (H, MA) definierten und gespeicherten zweiten teilnehmerspezifischen Profil (PB) vergleicht und gemäß einer zweiten teilnehmerspezifischen Korrelationsschwelle (KB) verwirft oder dem zweiten Teilnehmer (B) mitteilt,
**dadurch gekennzeichnet, dass**
e) der erste Teilnehmer (A), nachdem ihm ein zweites teilnehmerspezifisches Profil (PB) mitgeteilt wurde, eine Kommunikationsverbindung zu einem zwischengekoppelten Anbieter (P) des Kommunikationssystems aufbauen kann, wodurch dem zwischengekoppelten Anbieter (P) ein Kontaktwunsch des ersten Teilnehmers (A) zum zweiten Teilnehmer (B), die erste ID-Nummer (ID-A) und die zweite ID-Nummer (ID-B) mitgeteilt wird,
f) der zweite Teilnehmer (B), nachdem ihm ein erstes teilnehmerspezifisches Profil (PA) mitgeteilt wurde, eine Kommunikationsverbindung zu dem zwischengekoppelten Anbieter (P) aufbauen kann, wodurch dem zwischengekoppelten Anbieter (P) ein Kontaktwunsch des zweiten Teilnehmers (B) zum ersten Teilnehmer (B), die erste ID-Nummer (ID-A) und die zweite ID-Nummer (ID-B) mitgeteilt wird,
g) wobei der zwischengekoppelten Anbieter (P) dem ersten Teilnehmer (A) eine erste neutrale Telefonnummer (TA) und dem zweiten Teilnehmer (B) eine zweite neutrale Telefonnummer (TB) zuordnet, und dem ersten Teilnehmer (A) die zweite neutrale Telefonnummer (TB) und dem zweiten Teilnehmer (B) die erste neutrale Telefonnummer (TA) zur Verfügung stellt, über die bei Kontaktaufnahme durch einen der Teilnehmer (TA, TB) über den zwischengekoppelten Anbieter (P) eine Kommunikationsverbindung hergestellt wird.

2. Verfahren nach Anspruch 1,
**dadurch gekennzeichnet,**
**dass** als drahtlose, lokal begrenzte Netzwerk-Technologie eine LAN-, local area network, und/oder eine PAN-, personel area network, Technologie verwendet wird.

3. Verfahren nach Anspruch 1 oder 2,
**dadurch gekennzeichnet,**
**dass** als jeweiliges Kommunikationsgerät (E) jeweils ein mobiles, nach einem Standard funktionierendes Kommunikationsgerät eingesetzt wird, wobei der Standard aus einer Gruppe, bestehend aus: GSM, GPRS EDGE und UMTS, ist.

4. Verfahren nach einem der vorhergehenden Ansprüche,
**dadurch gekennzeichnet,**
**dass** als Eingabeeinheit (G) ein Computer verwendet wird.

5. Verfahren nach einem der vorstehenden Ansprüche,
**dadurch gekennzeichnet,**
**dass** die Zuweisung der neutralen Telefonnummern (TA, TB) temporär vorgenommen wird.

## Claims

1. Method for anonymous identification of profiles (PA, PB) of a first subscriber (A) by a second subscriber (B) in a communications system and, if required, for production of an anonymous communication link between the first subscriber (A) and the second subscriber (B), in which
a) the first subscriber (A) defines a first subscriber-specific profile (PA) and stores it via an input unit (G) of a first communication appliance (E) which is associated with it and/or of a first module (H, MA) which is coupled to this first communication appliance (E),
b) the second subscriber (B) defines a second subscriber-specific profile (PB) and stores it via an input unit (G) of a second communication appliance (E) which is associated with it and/or of a second module (H, MB) which is coupled to this second communication appliance (E),
c) the first module (H, MA) receives the second subscriber-specific profile (PB), which has been transmitted from the second module (H, MB) on the basis of a wire-free, local area network technology, and a second ID number (ID-B) of the second module (H, MB), which is associated with the second module (H, MB) and is transmitted from the second module (H, MB) and compares the received second subscriber-specific profile (PB) with the first subscriber-specific profile (PA) which is defined and stored in the first communication appliance (E) and/or in the first module (H, MA), and rejects it on the basis of a first subscriber-specific correlation threshold (KA) or signals it to the first subscriber (A),
d) the second module (H, MA) receives the first subscriber-specific profile (PA), which has been transmitted from the first module (H, MA) on the basis of a wire-free, local area network technology, and a first ID number (ID-A) of the first module (H, MA), which is associated with the first module (H, MA) and is transmitted from the first module (H, MA) and compares the received first subscriber-specific profile (PA) with the second subscriber-specific profile (PB) which is defined and stored in the second communication appliance (E) and/or in the second module (H, MB), and rejects it on the basis of a second subscriber-specific correlation threshold (KB) or signals it to the second subscriber (B),
**characterized in that**
e) once a second subscriber-specific profile (PB) has been signalled to the first subscriber (A), this first subscriber (A) can set up a communication link to an intermediate provider (P) in the communications system, by which means a contact of the first subscriber (A) to the second subscriber (B), the first ID number (ID-A) and the second ID number (ID-B), is signalled to the intermediate provider (P),
f) once a first subscriber-specific profile (PA) has been signalled to the second subscriber (B), this second subscriber (B) can set up a communication link to the intermediate provider (P), by which means a contact of the second subscriber (B) to the first subscriber (B), the first ID number (ID-A) and the second ID number (ID-B), is signalled to the intermediate provider (P),
g) in which case the intermediate provider (P) allocates a first neutral telephone number (TA) to the first subscriber (A) and allocates a second neutral telephone number (TB) to the second subscriber (B), and makes the second neutral telephone number (TB) available to the first subscriber (A) and the first neutral telephone number (TA) available to the second subscriber (B), via which a communication link is set up via the intermediate provider (P) when one of the subscribers (TA, TB) makes contact.

2. Method according to Claim 1,
**characterized**
**in that** a LAN, local area network, and/or a PAN, personal area network, technology is used as the wire-free, locally limited network technology.

3. Method according to Claim 1 or 2,
**characterized**
**in that** a respective mobile communication appliance, which operates in accordance with a standard, is used as the respective communication appliance (E), with the standard being from a group comprising: GSM, GPRS, EDGE and UMTS.

4. Method according to one of the preceding claims,
**characterized**
**in that** a computer is used as the input unit (G).

5. Method according to one of the above claims,
**characterized**
**in that** the neutral telephone numbers (TA, TB) are assigned temporarily.

## Revendications

1. Procédé pour l'identification anonyme de profils (PA, PB) d'un premier abonné (A) par un deuxième abonné (B) d'un système de communication et éventuellement pour l'établissement d'une liaison de communication anonyme entre le premier abonné (A) et le deuxième abonné (B), dans lequel
a) le premier abonné (A) définit et mémorise un premier profil (PA), spécifique à l'abonné, par l'intermédiaire d'une unité d'entrée (G) d'un premier appareil de communication (E) qui lui est associé et/ou d'un premier module (H, MA) couplé à ce premier appareil de communication (E),
b) le deuxième abonné (B) définit et mémorise un deuxième profil (PB), spécifique à l'abonné, par l'intermédiaire d'une unité d'entrée (G) d'un deuxième appareil de communication (E) qui lui est associé et/ou d'un deuxième module (H, MB) couplé à ce deuxième appareil de communication (E),
c) le premier module (H, MA) reçoit le deuxième profil (PB) spécifique à l'abonné et envoyé par le deuxième module (H, MB) sur la base d'une technologie de réseau sans fil et limitée localement et un deuxième numéro ID (ID-B), associé au deuxième module (H, MB) et émis par le deuxième module (H, MB), du deuxième module (H, MB), il compare le deuxième profil (PB), spécifique à l'abonné, reçu au premier profil (PA), spécifique à l'abonné, défini et mémorisé dans le premier appareil de communication (E) et/ou dans le premier module (H, MA) et, selon un premier seuil de corrélation (KA) spécifique à l'abonné, il le rejette ou il le communique au premier abonné (A),
d) le deuxième module (H, MB) reçoit le premier profil (PA) spécifique à l'abonné et envoyé par le premier module (H, MA) sur la base d'une technologie de réseau sans fil et limitée localement et un premier numéro ID (ID-A), associé au premier module (H, MA) et émis par le premier module (H, MA), du premier module (H, MA), il compare le premier profil (PA), spécifique à l'abonné, reçu au deuxième profil (PB), spécifique à l'abonné, défini et mémorisé dans le deuxième appareil de communication (E) et/ou dans le deuxième module (H, MA) et, selon un deuxième seuil de corrélation (KB) spécifique à l'abonné, il le rejette ou il le communique au deuxième abonné (B),
**caractérisé par le fait que**
e) après qu'un deuxième profil (PB) spécifique à l'abonné lui a été communiqué, le premier abonné (A) peut établir une liaison de communication vers un fournisseur intercalé (P) du système de communication, liaison par laquelle une demande de contact du premier abonné (A) au deuxième abonné (B), le premier numéro ID (ID-A) et le deuxième numéro ID (ID-B) sont communiqués au fournisseur intercalé (P),
f) après qu'un premier profil (PA) spécifique à l'abonné lui a été communiqué, le deuxième abonné (B) peut établir une liaison de communication vers le fournisseur intercalé (P), liaison par laquelle une demande de contact du deuxième abonné (B) au premier abonné (B), le premier numéro ID (ID-A) et le deuxième numéro ID (ID-B) sont communiqués au fournisseur intercalé (P),
g) le fournisseur intercalé (P) attribuant au premier abonné (A) un premier numéro de téléphone neutre (TA) et au deuxième abonné (B) un deuxième numéro de téléphone neutre (TB) et mettant à la disposition du premier abonné (A) le deuxième numéro de téléphone neutre (TB) et à la disposition du deuxième abonné (B) le premier numéro de téléphone neutre (TA), numéros par l'intermédiaire desquels une liaison de communication est établie lors de la prise de contact par l'un des abonnés (TA, TB) par l'intermédiaire du fournisseur intercalé (P).

2. Procédé selon la revendication 1,
**caractérisé par le fait que** l'on utilise comme technologie de réseau sans fil et limitée localement une technologie LAN, local area network, et/ou une technologie PAN, personal area network.

3. Procédé selon la revendication 1 ou 2,
**caractérisé par le fait que** l'on utilise comme appareil de communication (E) respectif à chaque fois un appareil de communication mobile fonctionnant selon un certain standard, le standard faisant partie d'un groupe constitué de : GSM, GPRS, EDGE et UMTS.

4. Procédé selon l'une des revendications précédentes,
**caractérisé par le fait que** l'on utilise comme unité d'entrée (G) un ordinateur.

5. Procédé selon l'une des revendications précédentes,
**caractérisé par le fait que** l'attribution des numéros de téléphone neutres (TA, TB) est effectuée temporairement.
